# EUROPEAN PATENT SPECIFICATION

(11) **EP 3 014 814 B1**
(45) Date of publication and mention of the grant of the patent: **30.10.2019**
(21) Application number: 14738437.4
(22) Date of filing: 25.06.2014
(51) Int. Cl.: H04L 12/28, H04Q 9/00, G01D 4/00

(54) **SYSTEM FOR CONNECTING SMART DEVICES IN A BUILDING**
SYSTEM ZUR VERBINDUNG VON INTELLIGENTEN VORRICHTUNGEN IN EINEM GEBÄUDE
SYSTÈME POUR CONNECTER DES DISPOSITIFS INTELLIGENTS DANS UN BÂTIMENT

(30) Priority: 25.06.2013 GB 201311242; 23.09.2013 GB 201316845
(43) Date of publication of application: 04.05.2016
(73) Proprietor: Siemens plc, Frimley, Camberley GU16 8QD (GB)
(72) Inventor: HEATHCOTE, Jeffrey, Sherwood Nottingham NG5 3FQ (GB); RAFFERTY, Stephen, Ilkeston Derbyshire DE7 6DE (GB)
(74) Representative: Maier, Daniel Oliver
(86) International application number: PCT/EP2014/063417
(87) International publication number: WO 2014/207048

(56) References cited:
- WO-A1-2007/086711
- US-A1- 2006 271 314
- US-A1- 2013 154 850

## Description

The present invention relates to a system for connecting smart devices in a building. More specifically, the present invention relates to the provision of connections between smart metering devices arranged within a multiple dwelling unit.

The United Kingdom (UK) have mandated the rollout of smart gas and electricity meters and in-home displays (IHD) to all households. These devices are to be linked together at a home using ZigBee™ (in the following referred to as ZigBee) radio (operating at 2.4GHz), utilizing the Smart Energy Profile 1.x through a device called a communications hub (CH). The Medium Access (MAC) and Physical Radio (PHY) layers of ZigBee are defined in the IEEE 802.15.4 standard.

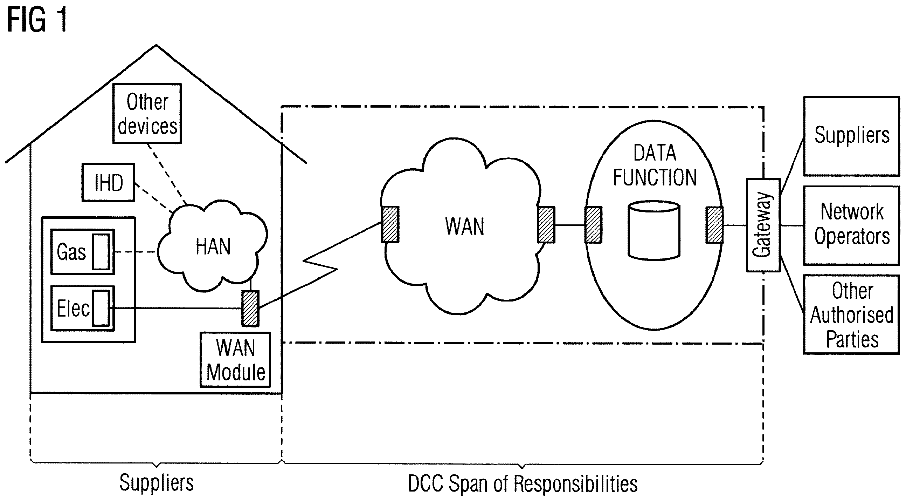

An example of the envisaged typical configuration is given in FIG 1, taken from "Smart Metering Implementation Programme: Prospectus", 27 July 2010, published by ofgem, ofgem E-Serve and the Department of Energy & Climate Change (http://www.ofgem.gov.uk/e-serve/sm/Documentation/Documents1/Smart%20metering%20-%20Prospectus.pdf).

Ofgem's proposal is based on smart metering components such as the above mentioned gas and electricity meters, in-home displays as well as other smart devices, for example provided by energy suppliers (energy providers, utility) to the individual household. The energy provider or utility will most likely also provide a communication hub to which the smart devices are either directly connected using wires or through a wireless home area network (HAN) using the ZigBee communication standard. The communication hub, referred to as WAN Module in FIG 1, also provides access to a wide area network (WAN) to which the energy providers as well as other authorised parties have access. The wide area network is planned to be managed by a central data and communications entity (DCC).

This approach should be suitable for the majority of households where gas and electricity meters as well as in-home displays are all within a limited distance or radio range of the communication hub. The UK Smart Metering Programme assumed that individual networks can be installed separately by energy retailers each time a smart meter is installed in a building (in line with assumptions for "normal" houses).

However, this approach will not be suitable for Multiple Dwelling Units (MDUs) where a larger number of dwellings reside within the same building, and where physical distance between smart devices, building material, interferences or physical space render individual setting up of home area networks required for every dwelling difficult.

US 2013/0154850 A1 discloses an system for extending a Smart Meter's range.

An object of the present invention is to provide a system that enables the implementation of smart metering in multiple dwelling units. Thereto, a system according to claim 1 is provided. Favourable embodiments are defined in dependent claims 2-15.

According to the present invention, a system for connecting smart devices in a building comprises at least two bridging devices, each arranged in relative proximity of at least one of at least two smart devices arranged at different locations within the building, wherein the at least two bridging devices are connected to the smart devices via a wireless connection and to at least one router device.

Preferably, each of the at least two bridging devices is connected to one router device.

Preferably, the router device is arranged in relative proximity of at least one of the smart devices.

Preferably, functionalities of the router device and the bridging device are realised or co-located in a single device. It may thus not be required to have two separate physical devices to realise the functionalities of the router and bridging device.

Preferably, the system further comprises at least one gateway device connected to the at least one router device and a wide area network. The gateway device may thereby also be either combined with or integrated into a central building control centre.

Preferably, the gateway device is connected to the wide area network via a modem. Such modem may thereby operate to mobile communications standards such as GPRS (General Packet Radio System), UMTS (Universal Mobile Telecommunication System) or other known long range radio standards.

Preferably, the at least one router device is connected to the wide area network through at least one bridging device

Preferably, the at least one bridging device is connected to at least one communication hub via a wireless connection, and the at least one communication hub is connected to the wide area network.

Preferably, the connection between the at least two bridging devices and the at least one router device is realised by a broadband network.

Preferably, the connection between the at least one router device and the at least one gateway device is realised by a broadband network.

Preferably, the broadband network is a power line communication network, a fibre optic network, an Ethernet or a Wireless Local Area Network. Such broadband network might already be installed in the building and can be used for the connections between bridging, router and gateway devices. Power line communication is considered being particularly suitable as it allows the use of the mains installed in for example the staircase of a multi storey building for communication and to power the devices required for the connections. Usually, the mains in a staircase are independent of the mains to the individual dwellings, so should not interfere with any potential communication traffic on the mains in the individual dwellings.

Preferably, the broadband network supports Internet Protocol based communication.

Preferably, the wireless connections between the at least two bridging devices and the at least two smart devices are realised using protocols defined in the IEEE 802.15.4 communication standard. Other short range wireless communication standards may be used as alternatives to the IEEE 802.15.4 ZigBee standard. Such standards can be the Wireless M-Bus as specified in European standard EN 13757-4 or IEEE 802.15.1 also known as Bluetooth.

Preferably, the at least two smart devices are smart meters, especially electricity and/or gas meters, and/or in-house displays and/or consumer access devices and/or prepayment meter interface devices. The meters thereby measure the energies consumed within the dwelling, whereas the in-home display show energy readings, consumption so far or other information relating to energy consumption. Such smart devices may also be those used for home automation.

Preferably, the building comprises multiple dwelling units or enclosed areas.

Preferably, smart devices relating to a specific dwelling unit or enclosed area of the building are logically combined to a virtual home area network.

Preferably, also at least one router device and at least one bridging device form part of the virtual home area network.

An example of the system according to the present invention will now be described with reference to the accompanying drawings in which:
FIG 1 illustrates the typical smart metering configuration as mandated by ofgem,
FIG 2 illustrates a first embodiment of the system according to the invention,
FIG 3 illustrates a second embodiment of the system according to the invention, comprising logically separated devices,
FIG 4 illustrates a third embodiment of the system according to the invention,
FIG 5 illustrates a fourth embodiment of the system according to the invention,
FIG 6 illustrates exemplary components and modules required in a centralised ESI,
FIG 7 depicts the conceptual component model for the ZigBee bridge,
FIG 8 depicts the conceptual component model for the network management system,
FIG 9 illustrates a further embodiment of the system,
FIG 10 illustrates exemplary mapping between clusters, and
FIG 11 illustrates types of protocol wrapping used in the system.

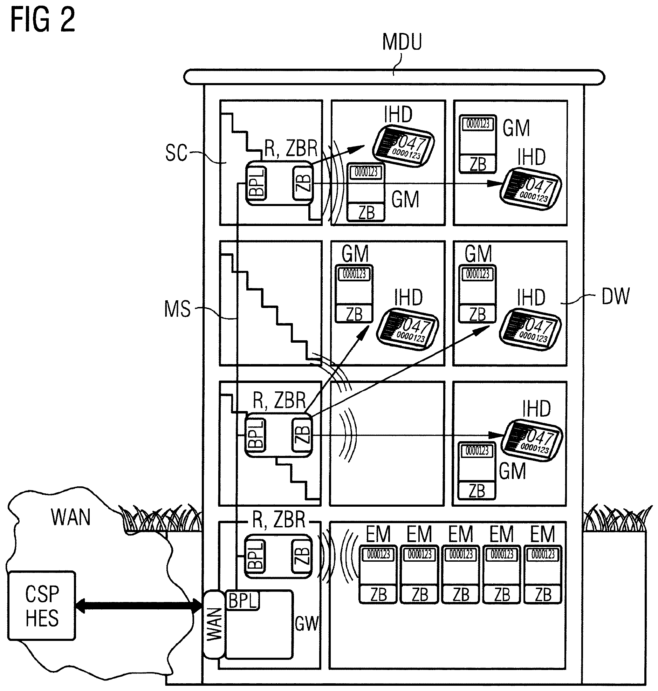

FIG 2 shows an example of a typical multiple dwelling unit MDU. The dwellings DW are arranged on three floors, with two dwelling arranged on every floor, and access to the dwellings provided by a central staircase SC. In the example of FIG 2, gas meters GM and in-home displays IHD are installed in the individual dwellings DW whereas electricity meters EM are installed in a room in the basement of the building.

For such exemplary arrangement, the installation and use of standard communication hubs in every individual dwelling as foreseen for normal households would be difficult if not impossible. One difficulty that may occur is that a communication hub installed in a dwelling on a higher floor may not be able to communicate with the electricity meter assigned to that dwelling, due to for example attenuation of radio waves caused by the building material used in the building. Another problem that can occur in an MDU is that the required wireless connection to the wide area network may be difficult to realise for all dwellings.

The invention addresses these difficulties with the installation of smart metering services in MDUs by the provision of additional bridging devices and routers which are connected to each other and thereby provide a communication infrastructure that can be used by smart devices such as meters and displays for secure and reliable communication. Communication between these devices can thereby be controlled by a central building control centre. It also allows for a central access to the wide area network WAN, for example by locating the WAN interface where WAN radio coverage is at a sufficiently high level for reliable communication. The inventive concept can thereby realise a fully managed communication infrastructure for any high, medium or low rise building.

The communication infrastructure consists of bridging devices, subsequently called ZigBee bridges ZBR, for example installed in the staircase SC on various floors of the MDU.

These ZigBee bridges ZBR provide reliable radio communication to a number of smart devices such as gas meters GM and in-home displays IHD situated in the dwellings DW. In the example of FIG 2, a further ZigBee bridge ZBR is arranged in the basement of the MDU, providing radio communication to a number of electricity meters EM situated in a room in the basement. The ZigBee bridges ZBR and smart devices communicate with each other via a ZigBee interface ZB using the ZigBee wireless communication protocol. Depending on the number of smart devices and quality of radio coverage, it might not be required to install one or more ZigBee bridges ZBR on every floor of the MDU. As shown in the example of FIG 2, it might also be possible to connect smart devices from dwellings arranged on two or more floors to a single ZigBee bridge ZBR.

Each ZigBee bridge ZBR interfaces with a router device R, for example via an Ethernet cable. In the example of FIG 2 however, a ZigBee bridge ZBR and a router R are co-located in one physical enclosure, but the functionalities of the two devices may also be realised in two physically separate entities. The routers R are connected to each other via a broadband network. The routers R may further be connected to each other for example via a centralised building control centre which may be realised in a gateway device. Preferably, the broadband network is realised using the mains MS installed in the staircase SC of the MDU to create a power line communication network through which data packets, for example IP packets, can be sent and received over power lines such as the mains in buildings. The existing mains MS may thereby also be used to power the routers R and ZigBee bridges ZBR installed on the various floors of the staircase SC. Other broadband networks types such as for example optical networks or WLAN may also be used for realising the broadband communication network in the MDU should these be readily available. The routers R are connected to the power line network via broadband power line interfaces BPL. Routers R are mainly responsible for exchanging and routing network data packets between the power line network and the ZigBee bridges ZBR.

In the example of FIG 2, also a gateway device GW is connected to the power line communication network. The gateway device GW thereby comprises an interface to the wide area network WAN provided by the communication service provider CSP and thus to the head end system HES.

In an alternative embodiment which is not specifically disclosed in FIG 2, only one router is provided in the power line network, and all ZigBee bridges ZBR also comprise an interface to and are directly connected to the power line network. In this case, the single router provides central management of the exchange and routing of data packets between the individual devices connected to the power line network.

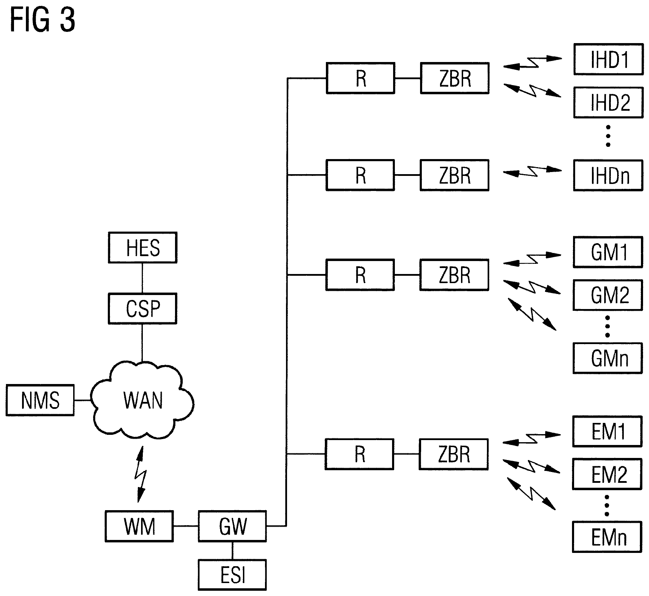

Based on the foregoing description, FIG 3 highlights the flexibility of the system according to the invention which allows for ZigBee enabled smart energy devices to be supported even though these are realised at different physical locations within an MDU and not in the radio frequency range of a single physical home area network HAN. As illustrated in FIG 3, logical rather than physical HANs are created which each cover all smart devices assigned to a specific dwelling. For example, an in-home display IHD1, a gas meter GM1 and an electricity meter EM1 all form part of a home area network that is assigned to a dwelling 1 of the MDU despite all three smart devices being connected to different ZigBee bridges ZBR. ZigBee bridges ZBR may thereby connect to a number of smart devices, which can of course also be different types of smart devices. As an example, the first and third ZigBee bridges ZBR (from top to bottom) may actually be the same ZigBee bridge ZBR that provides connections for in-home displays IHD1, IHD2 as well as to gas meters GM1-GMn.

In the example of FIG 3, the gateway device GW is furthermore connected to a WAN modem WM which in turn provides a wireless connection to the wide area network WAN. Such wireless modem supports for example one or several well known radio communication standards such as GPRS or UMTS which are used for connecting to the WAN provided by the communication service provider CSP, similar or identical to the WAN Module shown and explained with regards to FIG 1. In the example of FIG 3, access to a network management system NMS is also provided through the wide area network WAN.

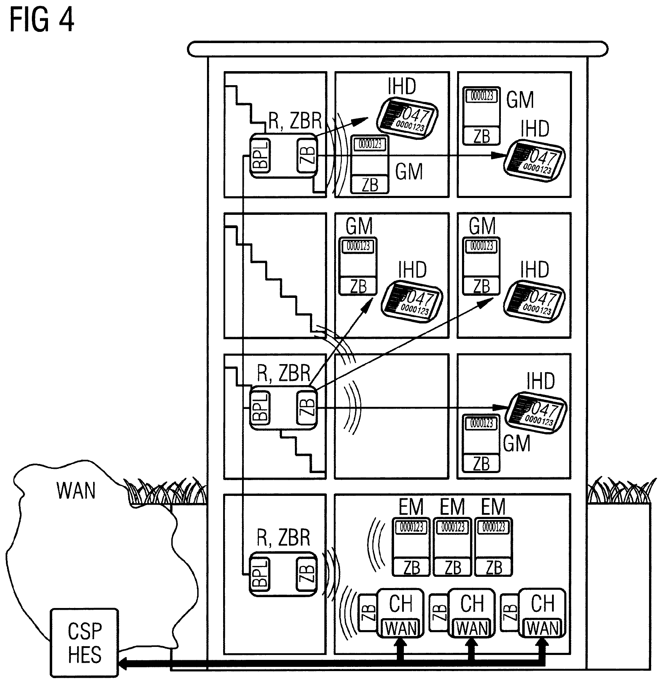

A further exemplary system configuration is illustrated in FIG 4. Based on FIG 2 described above, the configuration of FIG 4 is different in that the router device R located in the basement of the building connects to communication hubs CH which for example are located in the same room as or co-located with the electricity meters EM. The ZigBee bridge ZBR connected to or realised in the router device R connects to the communication hubs CH via a ZigBee interface ZB, in the same way as it connects to the electricity meters EM co-located with the communication hubs CH. The communication hubs CH are in turn connected to the wide area network WAN, for example via one or several wire based connections. In the exemplary configuration of FIG 4, every dwelling is assigned to a specific communication hub CH. This increases flexibility in the installation of communication hubs CH from for example different energy suppliers, which all use the power line network to access the respective smart devices assigned to them.

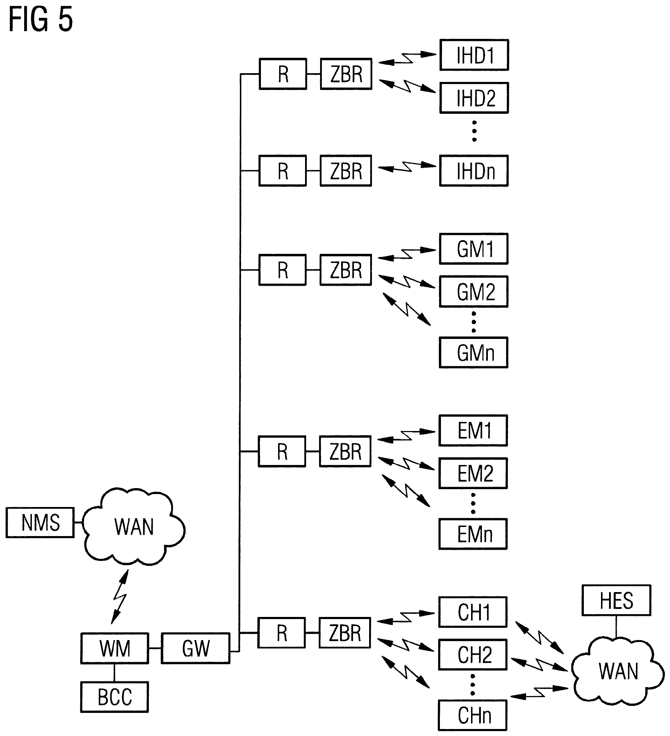

FIG 5 illustrates another possible configuration of the system based on FIG 3. Also in this configuration, one way of connecting to the wide area network WAN is through communication hubs CH1 to CHn, wherein a router device R connects to the communication hubs CH1 to CHn via a ZigBee bridge ZBR. Different to the configuration shown in FIG 4, the communication hubs CH1 to CHn in turn connect to the wide area network WAN wirelessly, using for example well known radio communication standards such as the above mentioned GPRS or UMTS. Alternatively, connection to the wide area network WAN is realised via a gateway device GW and a WAN modem WM. In this example also illustrated in FIG 5, a building control centre BCC is also connected to the WAN modem, however, a centralised building control centre BCC may also be connected to or integrated in the gateway device GW.

In the following, further aspects and exemplary details of the inventive system and components are discussed.

One advantage of the proposed system, hereinafter also referred to as MDU high rise solution, is the ability to connect disparately located smart devices on the same logical home area network HAN without the need for them to be physically on the same HAN. Another advantage is overcoming potential wide area network WAN connectivity issues through utilization of a single building gateway device. In case of a wireless connection to the WAN, the gateway may be located wherever in the building has the best WAN coverage. A further advantage is the establishing of a shared network solution which removes any potential problems associated with installing and maintaining individual energy retailer HANs, such as interference, security and low cost efficiency. The system also allows for the management of building traffic to ensure continued device connectivity, which is for example relevant for firmware updates. One important element of the system is the ZigBee bridge application which links multiple smart devices to a single ZigBee bridge. Finally, the system enables delivery of a non-intrusive building solution through the utilization of a broadband over power line communication backbone across the existing mains risers.

The proposed solution can provide a fully managed communication infrastructure for any high/medium/low rise buildings, to be used by smart energy devices. Key service requirements may be summarised as provision of a communication infrastructure which is relatively easy to install and to use which can accessed by smart energy devices; integration into Energy Retailer systems and processes; integration with SSWG (Smart Specification Working Group)/SMETS (Smart Metering Equipment Technical Specification) compliant smart metering devices and commercially available smart metering devices; being fully secure with appropriate access controls that comply with DECC (Department of Energy & Climate Change) and security requirements; and being commercially and technically interoperable.

For the exemplary design of the system, it is assumed that broadband power line devices are used to provide communication over power lines, that additional network management system requirements can be managed remotely, that required additional security can be managed under change control, that the communication infrastructure works will all SMETS2 (Smart Metering Equipment Technical Specification) compliant devices, and that the system is enabled to interface with any CSP within any given region. The proposed system provides communication infrastructure that can be used by energy suppliers and smart energy devices. It will also allow smart energy devices and CSPs to communicate with each other.

The proposed system may be based on design principles such as that the communication within the building is realised via IP and ZigBee, that a service oriented architecture is provided, that multiple interface types such as Web Services, File Based, Email notification and direct device interaction are supported, that changes made within a CSP do not create unanticipated changes within the rest of the application and vice versa, thereby minimising the risk of change, that it is loosely coupled to the ZigBee enabled smart energy devices, that the CSP shall provide protocol translation, encryption and WAN communication, that system devices are easy to be replaced and with a minimum of configuration required, that, where possible, configuration files, template files etc. are used to build a flexible solution, that high availability is guaranteed, that it is scalable to support meter rollout, that the system is secure by design across all components, that exceptions may be managed centrally, that it supports remote configurability, that it supports one or more business processes, that a command, once received by the system is fully traceable and may be de-aggregated into one or more requests, that a request may be de-aggregated into one or more activities, and that all logs, exceptions, results, status, events etc. created as a result of processing a command, are associated directly or indirectly to the originating command - providing complete traceability.

One example of the MDU high rise solution comprises of logically separate hardware components as depicted in FIG 3. It should be noted that in the illustrated example of FIG 3, there are few other possibilities where meters EM, GM can be present in the network. For example, it is not required that all gas meters are arranged on separate floors and in separate dwellings. Instead, they may also be arranged in the same RF range as the electricity meters. The proposed system therefore not restricted to specific locations of the gas GM and electricity meters EM.

The proposed MDU high rise solution can be broadly divided into following three sub solution categories:
Extending the range for all ZigBee enabled smart energy devices. The MDU High rise solution provides a communication infrastructure to be used by smart energy devices and by energy suppliers through external WAN interface. The solution provides an illusion to all ZigBee enabled smart energy devices that all of the required smart energy devices are within its RF range and forming a HAN, whereas each smart energy devices may not actually be physically in the same RF range. The RF range is extended using existing power lines within the building. The interface to these power lines is realised through broadband power line BPL routers, whereas the interface to smart energy devices from the BPL routers is realised via ZigBee bridges ZBR.

Providing a single CSP interface for all dwellings. In single dwelling environment, such as the in the example of FIG 1, a PAN (Personal Area Network) is formed through a communication hub which is also responsible for interacting with the energy supplier's HES (Head End System). In this environment the communication hub is usually physically connected to electricity metering device. In a multiple dwelling environment, the number of communication hubs would be equivalent to the number of dwellings in the building. For example, if the number of dwellings is five hundred, then there will be corresponding five hundred communication hubs required in the entire building, which will also interact with the HES separately. The proposed MDU high rise solution removes the requirement for multiple communication hubs, and a single centralised ESI (Energy Service Interface) is made responsible for forming a personal area network for each dwelling as well as for interacting with the HES.

Network and asset management. In the proposed MDU high rise solution, there is a need to manage and configure individual hardware devices present in the network. The solution thereby aims to provide a single network management system that provides a remote graphical interface to configure and manage the details of each hardware devices within the network. This remote network management interface may have multiple users, with different roles and privileges if required, based on the logged-in user the set of configuration details for the network will be exposed.

In order to provide the foregoing three sub solution categories, centralised ESI, ZigBee bridge, network management system and broadband power line software and devices are used which will be discussed in more details in the following.

The centralised ESI provides a single hardware solution for multiple communication hubs required for each dwelling within the MDU high rise solution. Each dwelling is served via a virtual communications hub named as a virtual communication hub instance present in the centralised ESI. This virtual communications hub is responsible for forming and maintaining the PAN/HAN and is also responsible for interacting with the HES.

The centralised ESI is responsible for managing each ESI instance and interfacing with BPL devices. It is for example managed by a local GUI (Graphical User Interface) and a set of network management APIs (Application Programming Interface) implemented under ESI remote management module. The centralised ESI further interfaces for example with: An energy supplier, for the receipt of action requests and configuration updates, and to allow the reporting of readings and alerts. Also for the receipt of requests to top-up smart meters acting in pre-payment mode and return of unique UTRNs. Many different formats of data could be received depending upon the supplier the centralised ESI is interfacing with; Energy Suppliers Agents, to allow the reporting of readings and other pre-defined data that will be transacted on behalf of suppliers; Industry supplier registration, for the receipt of registration data to control access and to allow reporting of smart metering systems. This may be handled in at least two different formats, one for gas and one for electricity; Field workers, for the receipt of information at the moment of commissioning smart assets, linking the assets used with the metering points relevant to the job. This can be achieved through ESI remote management module with in centralised ESI; Asset providers or manufacturers, for the receipt of off-circuit asset data prior to commissioning and firmware update information. Many different formats of data could be received depending upon the party the centralised ESI is interfacing with. In addition, the provision of reports that include diagnostic information, for example alerts and alarms, which are of interest to the asset provider; Payment providers, for the receipt of requests to top-up smart meters acting in pre-payment mode and return of unique UTRNs. Different formats of data could be received depending upon the payment provider the MDU high rise solution is interfacing with; and Internal Users, for access via the GUI and receipt of reports.

Responsibilities of the centralised ESI are for example acceptance, authentication, structurally validating and transforming incoming data; formatting and transmitting services responses; provision of user data for external administration; interfacing with internal services; routing messages between PAN, i.e. virtual communication hub, and the HES; routing ZigBee messages from a virtual communications hub to the right ZBR; provision of an interface to execute external commands for internal smart energy devices; provision of an interface with BPL device; and provision of an interface for use by a network management system.

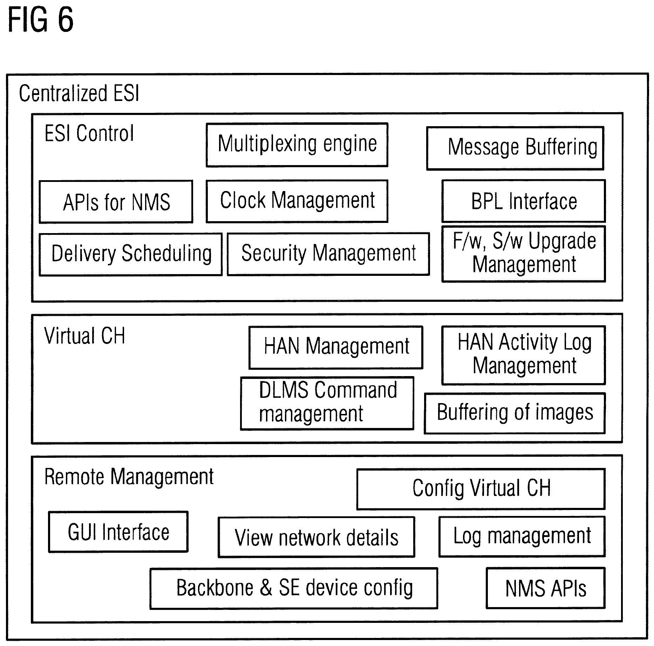

FIG 6 lists exemplary components and modules required in a centralised ESI. The ESI control acts as a main engine for the centralised ESI and is responsible for the following modules and activities:
The Multiplexing Engine is responsible for routing received messages from the HES to the right virtual instance of communication hub. Also, it is responsible for routing received ZigBee messages from ZigBee enabled smart energy devices to the right virtual instance of communication hub.

Regarding the message buffering, the buffer is used to store all messages it has received via its BPL interface, wherein these messages can originate from an external WAN network or can also be received from a local ZigBee network. The buffering is also required for all messages that are initiated from a virtual Communication hub, regardless of whether it is for the head end system HES or for the ZigBee bridge ZBR.

A common clock or clock management may be used in all virtual ESI instances which will be managed by the ESI central module. This is important since all of the ESI instances are virtual and generally do not run on their own hardware. For all clock related activities a log should be updated to record any changes made to the central clock system.

A BPL interface module is responsible for interfacing with the BPL gateway, if for example the centralised ESI is connected to the BPL network via a BPL gateway, for example via an Ethernet connection.

Security Management. The individual PAN security credentials are maintained by the individual virtual communication hubs. However, in addition to these PAN securities there is a need to secure all external WAN messages for the centralised ESI and vice versa. The security for external messages may be maintained by the security management module which is responsible for encrypting and decrypting any external WAN messages.

Firmware/Software upgrade management. The centralised ESI software is composed of two units, virtual communication hub software and other functionalities of centralised ESI (ESI control and ESI remote management). These two units may be remotely updated independently.

The virtual communication hub instance is a single instance that is created during the network configuration through ESI remote management module. The number of virtual communication hub instances is defined during the initial configuration process and for example based on the number of dwellings present in the building. Each of the virtual communications hubs performs the following activities:
HAN management. There is a separate home area network for each dwelling which is created and maintained by the individual virtual communication hub known as ESI instance.

Each ESI instance is capable of initiating the network and responsible for adding ZigBee enabled smart energy devices in the network.

HAN Activity Log management. This sub module is responsible for logging events and exceptions that have occurred in the ESI instance. There might be a separate log for every ESI instance.

Message Scheduler. This sub module is responsible for scheduling the sending of previously received messages. These messages can be either from the HES or from local smart energy device, and are to be sent within its HAN.

DLMS (Device Language Message Specification) command management. For sending any specific command from the HES to electricity and/or gas meters, HES initiates a command to open a tunnel for the meter. This tunnel is created from the virtual communication hub to for example the electricity meter present in the HAN. This sub module is responsible for responding the received tunnel commands from HES and is responsible for maintaining the tunnel for HES to pass further messages to the meter.

Buffering of images. Each ESI instance is capable of storing firmware images for the ZigBee devices that are present in its HAN.

The remote management module of the Centralised ESI provides a GUI to perform the following activities at the centralised ESI, as also depicted in FIG 6:
GUI Interface. This sub module provides a graphical user interface to all activities the ESI remote management system provides in the centralised ESI.

SE (smart energy) device configuration. An interface to configure smart energy devices. ZigBee enabled smart energy devices may be connected through virtual communication hubs and may only be accessed through the centralised ESI.

Log management. Each centralised ESI activity is maintained in an event and log book. This sub module is responsible for maintaining such log book with time stamps.

Configuration of virtual communication hub. An interface to configure communications hub software and its number of virtual instances required during the network installation.

View network details. The list of ZigBee devices and ZigBee bridges ZBR that are present in the network, with their status, can be shown in the graphical user interface.

Network Management System Application Programming Interface (NMS API). A field engineer may use the NMS interface to configure and manage the entire system remotely. For this, every devices in network needs to expose a set of APIs to be accessed from NMS. These sets of APIs will allow field engineer to configure the system and view the current status, logs of the centralised ESI.

An exemplary ZigBee bridge acts as an interface between a BPL router and ZigBee devices located within its RF range. Typical responsibilities of a ZigBee bridge device are the provision of an interface through which ZigBee messages can be transferred between BPL router and ZigBee device, the provision of MAC level acknowledgements for sleepy and non-sleepy devices within its RF range, the provision of a storage mechanism for sleepy device, to expose a set of configuration APIs for remote network management system, to allow local hardware configuration through a local device interface, for example via an USB or Ethernet cable, and to provide and manage a white list, for example a list of approved ZigBee devices within its RF range.

According to the proposed system, the ZigBee bridge interfaces with a BPL router and the network management system NMS. The connection between ZBR and BPL router is realised for example via an Ethernet cable. The BPL router is thereby responsible for exchanging network data packets between power line and ZBR, but not for changing any features of the ZigBee bridge. The remote network management system, discussed in more details below, in turn is for example responsible for configuring ZBRs present in the network as per installation requirements, viewing and clearing logs collected by ZBR, upgrading the firmware of the device and querying the device status if required.

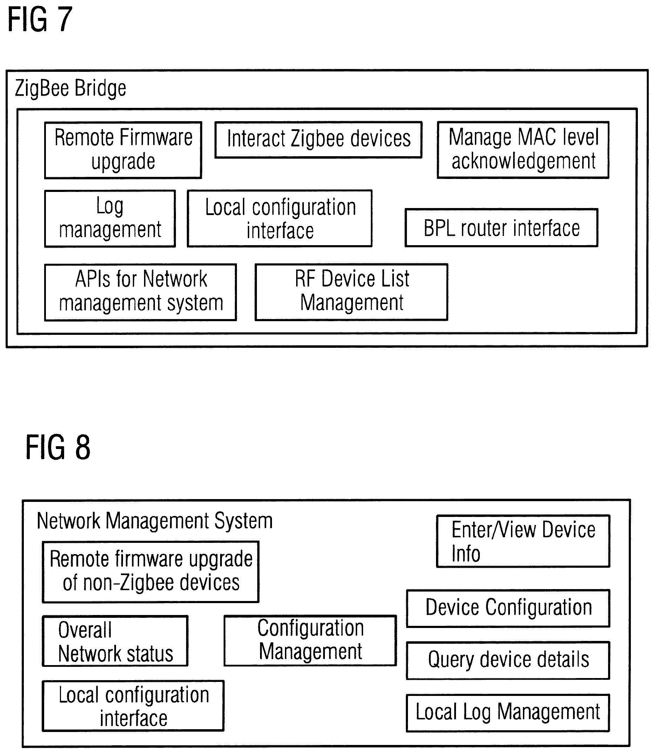

Individual sub components reflecting the main requirements of the ZigBee bridge are illustrated in FIG 7.

Interact with ZigBee devices. All ZigBee devices are connected to the backbone network via ZigBee bridges. A ZigBee bridge is responsible for sending messages received from ZigBee devices over the IP based backbone network. Within the backbone network, ZigBee bridges do not join ZigBee networks and remain invisible to ZigBee devices.

Manage MAC level acknowledgement. In the situation where all ZigBee devices are in the same RF range, each device sends a MAC acknowledgement for every received data packet. If the sending device does not receive MAC acknowledgement it assumes that the receiving device has not received the packet, which causes the MAC layer in the sending device to repeat the sending of the same packet. In the proposed MDU solution, the network range is increased by the use of an IP protocol based backbone network to which all ZigBee devices are connected via ZigBee bridges ZBR. Once a message is received at a ZigBee bridge ZBR via its RF interface, it generates a MAC acknowledgement for the same to avoid retransmissions in the ZigBee network caused for example by delays in providing such acknowledgement from the receiving device. The ZigBee bridge ZBR thus acts as if it was the receiving ZigBee device of the packet. Alternatively, such acknowledgement may also be provided by the router or the gateway installed in the building.

Remote Firmware Upgrade. Ideally, while installing the network as described above, every ZigBee bridge ZBR and BPL router it is connected to remain invisible to the user. Because it might be difficult for the field engineer to update the firmware on every Zigbee bridge ZBR following completion of the installation, a remote update of the firmware and thus features of ZigBee bridges is required. Such firmware update may be initiated and controlled from the NMS.

BPL router interface. As illustrated above, a ZigBee bridge ZBR is connected to the backbone network via a BPL router through the router's IP interface. This interface enables the ZigBee bridge ZBR to transmit received packets received via the ZigBee RF interface over the backbone network, and the same interface also enables the ZigBee bridge to receive messages generated by other ZigBee devices which are connected to other ZigBee bridges.

Log Management. The ZigBee bridge ZBR maintains an activity, exception and event log for example for maintenance purpose.

APIs for network management system. All devices present in the MDU network may be managed via network management interface. Any interaction with the NMS is realised via a set of exposed APIs on each device.

Local device configuration. In case of for example a failure of ZigBee bridge ZBR and requirement for replacing it, this interface allows the field engineer to configure the new device before placing it to the network.

RF device list management. The ZigBee bridge maintains a list of devices it is connected to and which are in its RF range.

This helps to avoid that a ZigBee device located in the RF range of two or more ZigBee bridges is addressed by all of these.

The network management system provides a unified remote graphical user interface GUI through which network activities can be monitored and configured. FIG 8 depicts the conceptual component model for the network management system NMS, wherein all or a number of these components may be realised.

Remote firmware upgrade of non-ZigBee devices. This allows product vendors to update device features when the device is already in operation or under field testing. The interface to update the firmware/software is via the NMS, and may for example be done by the field engineer.

Enter/ View Device Info. Once all the devices have been placed in the network, this interface in NMS will enable a field engineer to configure the device information. This may help field engineers at a later stage to locate devices in the entire system, by seeing their string based information. For example, if ZigBee bridge ZBR1 is connected in floor 1 of a building, then this interface will allow the field engineer to update the device information as for example "Floor_X_ZBR_Y".

Device Configuration. Once a device has been placed in the network, it must be configured in order to be used in the system. For example, a ZigBee bridge ZBR channel is configured based on the building floor on which it is located. This device configuration allows field engineers to configure the device remotely.

Overall Network status. Once all devices are connected and configured in the network, a graphical user interface allows field or support engineers to view the current status of the network.

Query device details. This interface allows field or support engineers to query any specific configuration and log details from any non-ZigBee device in the network.

Local log management. The network management system NMS may maintain its own logs for commands it has executed in the network and corresponding responses it has received from device. These logs may be accessed remotely by the field or support engineer for example depending on failure scenarios.

Local configuration interface. Before the network management system NMS can be used for the system, configuration of the NMS is required. These configurations may be realised via the local NMS configuration interface.

Configuration Management. The network management system NMS may also hold various configurations that are required for various devices in the network. Thus, at various instances there is a possibility to replace the installed product with a new one having the same configuration. These configuration details can be retrieved from the NMS and may further be used by the new device.

Broadband power line BPL devices used for the proposed system are for example routers, a gateway and a WAN modem, wherein a BPL router connects a Zigbee bridge ZBR to the power line backbone network, a gateway connects the centralised ESI to the WAN modem and is connected to the power line backbone network, and WAN modem connects the entire communication infrastructure to for example internet. According to the examples of FIG 3 and FIG 5, the WAN modem is connected to BPL gateway.

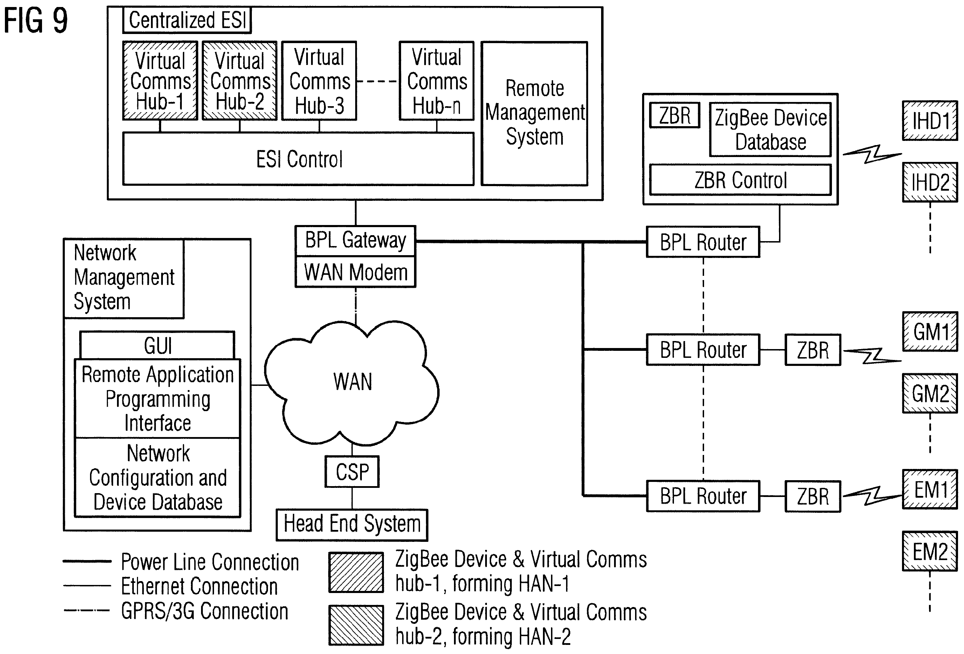

FIG 9 illustrates another example of the proposed system which is based on FIG 3. It is thereby assumed that every ZigBee bridge ZBR implements the same set of components and features, even though only one of them is expanded to show its internal block diagram. Furthermore, the example of FIG 9 only shows two home area networks each connected to smart devices. Similarly, all virtual communications hub are assumed to create a HAN for each dwelling. According to the depicted example, smart devices IHD1, GM1 and EM1 are connected to Virtual Comms Hub-1, whereas smart devices IHD2, GM2 and EM2 are connected to Virtual Comms Hub-2.

The proposed system is implemented by way of ZigBee clusters. The communication between ZigBee devices is thereby realised via cluster commands and attribute commands supported by the cluster devices. Every ZigBee device along with its corresponding Virtual Comms Hub implements a group of clusters required for forming and maintaining the smart energy network.

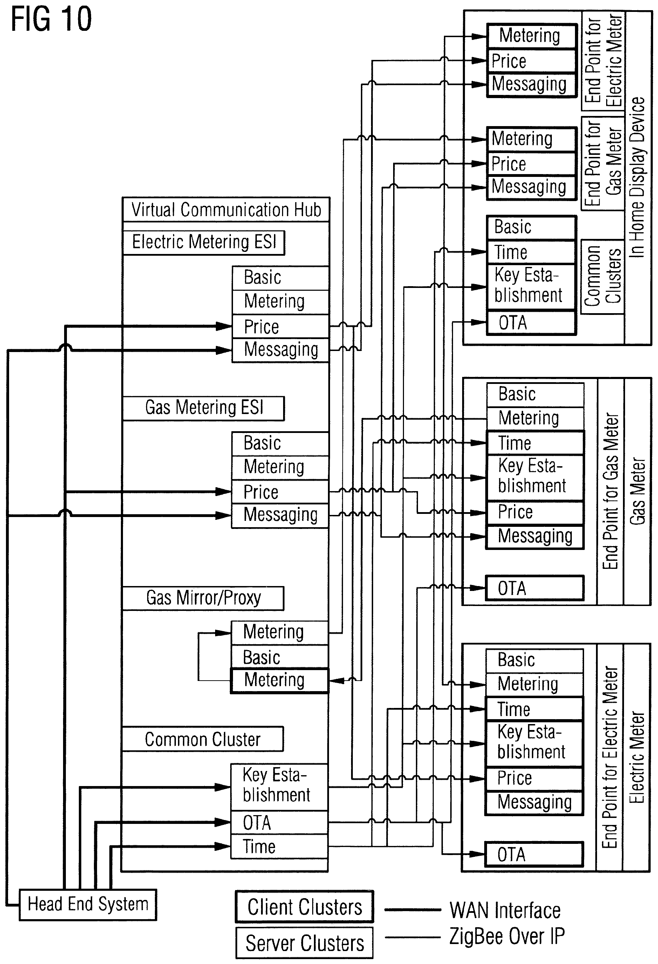

FIG 10 shows an example of the mapping between each of the clusters, from the head end system HES to the Virtual Communication Hub and from there to the ZigBee devices connected to the communication infrastructure. The Clusters may thereby divided into client clusters and server clusters as highlighted in FIG 10. It should be noted that, within a Virtual Communications Hub, each ESI may hold common clusters which are listed under a common cluster heading. The example does not show the specific hardware devices present in the network, and does also not list all clusters present in the Virtual Communication Hub and in the ZigBee devices, but it shows an exemplary basic list of clusters for demonstrating the communication from the head end system HES to the ZigBee devices.

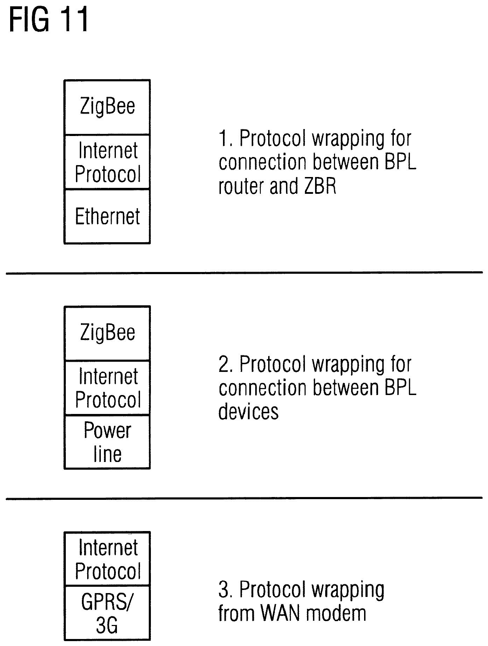

In the MDU communication infrastructure network according to the invention, exemplary details of data packets exchanged between connected devices are depicted in the example of FIG 11 which shows three types of protocol wrapping. According to this example, as a first type, ZigBee packets are wrapped over IP before being sent via the Ethernet interface. Such packet wrapping will be used all data packets exchanged between a BPL router and the ZigBee bridge ZBR connected to it. As a second type, the received IP wrapped ZigBee packets are transmitted by the BPL router over the power line network. As a third type, all messages sent from WAN modem are IP based and sent for example via a GPRS or UMTS (3G) radio interface.

## Claims

1. System for connecting smart devices in a building, the system comprising
at least two bridging devices, each arranged in relative proximity of at least one of at least two smart devices arranged at different locations within the building, wherein the at least two bridging devices are connected to the smart devices via a wireless connection and to at least one router device,
wherein the building comprises multiple dwelling units or enclosed areas,
**characterized in that**
the smart devices relating to a specific dwelling unit or enclosed area of the building are logically combined to a virtual home area network, wherein a single centralised Energy Service Interface is adapted to provide multiple virtual communication hubs which are configured to form the virtual home area networks for each dwelling or enclosed area, and wherein the virtual communication hubs also are adapted to interact with a Head End System.

2. System according to claim 1, wherein
each of the at least two bridging devices is connected to one router device.

3. System according to claim 2, wherein
the router device is arranged in relative proximity of at least one of the smart devices.

4. System according to claim 3, wherein
functionalities of the router device and the bridging device are realised or co-located in a single device.

5. System according to any of the preceding claims, further comprising
at least one gateway device connected to the at least one router device and a wide area network.

6. System according to claim 5, wherein
the at least one gateway device is connected to the wide area network via a modem.

7. System according to any of claims 1 to 4, wherein
the at least one router device is connected to the wide area network through at least one bridging device.

8. System according to claim 7, wherein
the at least one bridging device is connected to at least one communication hub via a wireless connection, and
the at least one communication hub is connected to the wide area network.

9. System according to claim 2, wherein
the connection between the at least two bridging devices and the at least one router device is realised by a broadband network.

10. System according to claim 5, wherein
the connection between the at least one router device and the at least one gateway device is realised by a broadband network.

11. System according to claim 9 or 10, wherein
the broadband network is a power line communication network, a fibre optic network, an Ethernet or a Wireless Local Area Network.

12. System according to claim 9 or 10, wherein
the broadband network supports Internet Protocol based communication.

13. System according to any of the preceding claims, wherein the wireless connections between the at least two bridging devices and the at least two smart devices are realised using protocols defined in the IEEE 802.15.4 communication standard.

14. System according to any of the preceding claims, wherein the at least two smart devices are smart meters, especially electricity and/or gas meters, and/or in-house displays and/or consumer access devices and/or prepayment meter interface devices.

15. System according to any of the preceding claims, wherein also at least one router device and at least one bridging device form part of the virtual home area network.

## Patentansprüche

1. System zum Verbinden von intelligenten Vorrichtungen in einem Gebäude, wobei das System umfasst:
wenigstens zwei Überbrückungsvorrichtungen, die jeweils in relativer Nähe zu wenigstens einer von wenigstens zwei intelligenten Vorrichtungen angeordnet sind, die an verschiedenen Orten innerhalb des Gebäudes angeordnet sind,
wobei die wenigstens zwei Überbrückungsvorrichtungen mit den intelligenten Vorrichtungen über eine drahtlose Verbindung und mit wenigstens einer Router-Vorrichtung verbunden sind,
wobei das Gebäude mehrere Wohneinheiten oder geschlossene Bereiche umfasst,
**dadurch gekennzeichnet, dass**
die intelligenten Vorrichtungen, die einer speziellen Wohneinheit oder einem speziellen geschlossenen Bereich des Gebäudes zugeordnet sind, logisch zu einem virtuellen Heimnetzwerk kombiniert sind, wobei eine einzige zentralisierte Energiedienst-Schnittstelle (Energy Service Interface) dafür ausgelegt ist, mehrere virtuelle Kommunikations-Hubs bereitzustellen, welche dafür konfiguriert sind, die virtuellen Heimnetzwerke für jede Wohnung oder jeden geschlossenen Bereich zu bilden, und wobei die virtuelle Kommunikations-Hubs außerdem dafür ausgelegt sind, mit einem Head-End-System zu interagieren.

2. System nach Anspruch 1, wobei
jede der wenigstens zwei Überbrückungsvorrichtungen mit einer Router-Vorrichtung verbunden ist.

3. System nach Anspruch 2, wobei
die Router-Vorrichtung in relativer Nähe zu wenigstens einer der intelligenten Vorrichtungen angeordnet ist.

4. System nach Anspruch 3, wobei
Funktionalitäten der Router-Vorrichtung und der Überbrückungsvorrichtung in einer einzigen Vorrichtung realisiert oder kolloziert sind.

5. System nach einem der vorhergehenden Ansprüche, welches ferner umfasst:
wenigstens eine Gateway-Vorrichtung, die mit der wenigstens einen Router-Vorrichtung und einem Weitverkehrsnetz verbunden ist.

6. System nach Anspruch 5, wobei
die wenigstens eine Gateway-Vorrichtung mit dem Weitverkehrsnetz über ein Modem verbunden ist.

7. System nach einem der Ansprüche 1 bis 4, wobei
die wenigstens eine Router-Vorrichtung mit dem Weitverkehrsnetz durch wenigstens eine Überbrückungsvorrichtung verbunden ist.

8. System nach Anspruch 7, wobei
die wenigstens eine Überbrückungsvorrichtung mit wenigstens einem Kommunikations-Hub über eine drahtlose Verbindung verbunden ist, und
der wenigstens eine Kommunikations-Hub mit dem Weitverkehrsnetz verbunden ist.

9. System nach Anspruch 2, wobei
die Verbindung zwischen den wenigstens zwei Überbrückungsvorrichtungen und der wenigstens einen Router-Vorrichtung durch ein Breitbandnetz realisiert ist.

10. System nach Anspruch 5, wobei
die Verbindung zwischen der wenigstens einen Router-Vorrichtung und der wenigstens einen Gateway-Vorrichtung durch ein Breitbandnetz realisiert ist.

11. System nach Anspruch 9 oder 10, wobei
das Breitbandnetz ein Powerline-Kommunikationsnetz, ein Glasfasernetz, ein Ethernet oder ein drahtloses lokales Netzwerk ist.

12. System nach Anspruch 9 oder 10, wobei
das Breitbandnetz Internet-Protokoll-basierte Kommunikation unterstützt.

13. System nach einem der vorhergehenden Ansprüche, wobei die drahtlosen Verbindungen zwischen den wenigstens zwei Überbrückungsvorrichtungen und den wenigstens zwei intelligenten Vorrichtungen unter Verwendung von Protokollen realisiert werden, die im Kommunikationsstandard IEEE 802.15.4 definiert sind.

14. System nach einem der vorhergehenden Ansprüche, wobei die wenigstens zwei intelligenten Vorrichtungen intelligente Zähler sind, insbesondere Strom- und/oder Gaszähler, und/oder In-House-Anzeigen und/oder Verbraucherzugriffsgeräte und/oder Schnittstellengeräte für Vorauskassenzähler.

15. System nach einem der vorhergehenden Ansprüche, wobei auch wenigstens eine Router-Vorrichtung und wenigstens eine Überbrückungsvorrichtung Bestandteile des virtuellen Heimnetzwerks sind.

## Revendications

1. Système de connexion de dispositifs intelligents dans un bâtiment, le système comprenant :
au moins deux dispositifs de pontage, chacun étant agencé à proximité relative d'au moins un dispositif parmi au moins deux dispositifs intelligents agencés en différents endroits à l'intérieur du bâtiment, étant entendu que les au moins deux dispositifs de pontage sont connectés aux dispositifs intelligents par une connexion sans fil et à au moins un dispositif routeur,
étant entendu que le bâtiment comprend de multiples unités d'habitation ou des zones closes,
**caractérisé en ce que** :
les dispositifs intelligents relatifs à une unité d'habitation ou zone close spécifique du bâtiment sont combinés logiquement en un réseau local domestique virtuel, étant entendu qu'une seule Interface centralisée de services énergétiques est adaptée en vue de fournir de multiples concentrateurs virtuels de communication qui sont configurés pour former les réseaux locaux domestiques virtuels destinés à chaque logement ou zone close, et étant entendu que les concentrateurs virtuels de communication sont aussi adaptés en vue d'interagir avec un Système de tête de réseau.

2. Système selon la revendication 1, étant entendu :
que chacun des au moins deux dispositifs de pontage est connecté à un dispositif routeur.

3. Système selon la revendication 2, étant entendu :
que le dispositif routeur est agencé à proximité relative d'au moins l'un des dispositifs intelligents.

4. Système selon la revendication 3, étant entendu :
que les fonctionnalités du dispositif routeur et du dispositif de pontage sont réalisées ou colocalisées en un seul dispositif.

5. Système selon l'une quelconque des revendications précédentes, comprenant par ailleurs :
au moins un dispositif passerelle connecté à l'au moins un dispositif routeur et à un réseau étendu.

6. Système selon la revendication 5, étant entendu :
que l'au moins un dispositif passerelle est connecté au réseau étendu par un modem.

7. Système selon l'une quelconque des revendications 1 à 4, étant entendu :
que l'au moins un dispositif routeur est connecté au réseau étendu par au moins un dispositif de pontage.

8. Système selon la revendication 7, étant entendu :
que l'au moins un dispositif de pontage est connecté à au moins un concentrateur de communication par une connexion sans fil, et
que l'au moins un concentrateur de communication est connecté au réseau étendu.

9. Système selon la revendication 2, étant entendu :
que la connexion entre les au moins deux dispositifs de pontage et l'au moins un dispositif routeur est réalisée au moyen d'un réseau à large bande.

10. Système selon la revendication 5, étant entendu :
que la connexion entre l'au moins un dispositif routeur et l'au moins un dispositif passerelle est réalisée au moyen d'un réseau à large bande.

11. Système selon la revendication 9 ou 10, étant entendu :
que le réseau à large bande est un réseau de communication sur ligne électrique, un réseau à fibres optiques, un réseau local Ethernet ou sans fil.

12. Système selon la revendication 9 ou 10, étant entendu : que le réseau à large bande prend en charge la communication basée sur le Protocole Internet.

13. Système selon l'une quelconque des revendications précédentes, étant entendu :
que les connexions sans fil entre les au moins deux dispositifs de pontage et les au moins deux dispositifs intelligents sont réalisées au moyen de protocoles définis dans la norme de communication 802.15.4 de l'IEEE.

14. Système selon l'une quelconque des revendications précédentes, étant entendu :
que les au moins deux dispositifs intelligents sont des compteurs intelligents, en particulier des compteurs d'électricité et/ou de gaz, et/ou des dispositifs d'affichage intérieurs domestiques et/ou des dispositifs permettant l'accès des consommateurs et/ou des dispositifs formant interface avec des compteurs à prépaiement.

15. Système selon l'une quelconque des revendications précédentes, étant entendu :
qu'au moins un dispositif routeur et au moins un dispositif de pontage font également partie du réseau local domestique virtuel.
